# EUROPÄISCHE PATENTANMELDUNG

(11) **EP 3 376 119 A1**
(43) Veröffentlichungstag der Anmeldung: **19.09.2018**
(21) Anmeldenummer: 17160490.3
(22) Anmeldetag: 13.03.2017
(51) Int. Cl.: F24D 17/00, B60R 15/00, B64D 11/02, E03C 1/044, F24D 19/10

(54) **SYSTEM ZUR VERSORGUNG EINER REGULIERBAREN ZUFLUSSARMATUR SOWIE VERFAHREN ZUM BEFÜLLEN DES SYSTEMS**

(71) Anmelder: Kendrion Kuhnke Automotive GmbH, 23714 Malente (DE)
(72) Erfinder: KEMKOWSKI, Thomas, 23715 Braak (DE); MELZER, Frank, 23701 Eutin (DE)
(74) Vertreter: Seemann & Partner Patentanwälte mbB

(57) **Zusammenfassung**

Die Erfindung betrifft ein System (2) zur Versorgung einer regulierbaren Zuflussarmatur (4), ein Fahrzeug (62) mit einem solchen System (2) sowie ein Verfahren zum Befüllen eines solchen Systems (2). Das System (2) zur Versorgung der regulierbaren Zuflussarmatur (4) mit temperiertem Wasser (6) umfasst einen Kaltwasserzulauf, einen Warmwasserbereiter (12), eine Bypass-Leitung (14) und ein Mischventil (16) und wobei der Warmwasserbereiter (12) eingangsseitig an den Kaltwasserzulauf (10) und ausgangsseitig an einen Warmwassereingang (18) des Mischventils (16) angeschlossen ist und die Bypass-Leitung (14) den Kaltwasserzulauf (10) mit einem Kaltwassereingang (20) des Mischventils (16) verbindet und wobei das Mischventil (16) ausgangsseitig an die Zuflussarmatur (4) angeschlossen und dazu eingerichtet ist, in Abhängigkeit von einer Ventilstellung temperiertes Wasser (6) bereitzustellen, wobei in die Bypass-Leitung (14) ein Durchflusselement (26) integriert ist, welches eine Durchflussmenge durch die Bypass-Leitung (14) zumindest temporär zumindest begrenzt.

## Beschreibung

Die Erfindung betrifft ein System zur Versorgung einer regulierbaren Zuflussarmatur mit temperiertem Wasser, wobei das System einen Kaltwasserzulauf, einen Warmwasserbereiter, eine Bypass-Leitung und ein Mischventil umfasst, und wobei der Warmwasserbereiter eingangsseitig an den Kaltwasserzulauf und ausgangsseitig an einen Warmwassereingang des Mischventils angeschlossen ist und die Bypass-Leitung den Kaltwasserzulauf direkt mit einem Kaltwassereingang des Mischventils verbindet, wobei das Mischventil ausgangsseitig an die Zuflussarmatur angeschlossen und dazu eingerichtet ist, in Abhängigkeit von einer Ventilstellung temperiertes Wasser bereitzustellen.

Außerdem betrifft die Erfindung ein Verfahren zum Befüllen eines Systems zur Versorgung einer regulierbaren Zuflussarmatur mit temperiertem Wasser, wobei das System einen Kaltwasserzulauf, einen Warmwasserbereiter, eine Bypass-Leitung und ein Mischventil umfasst, und wobei der Warmwasserbereiter eingangsseitig an den Kaltwasserzulauf und ausgangsseitig an einen Warmwassereingang des Mischventils angeschlossen ist und die Bypass-Leitung den Kaltwasserzulauf direkt mit einem Kaltwassereingang des Mischventils verbindet, wobei das Mischventil ausgangsseitig an die Zuflussarmatur angeschlossen und dazu eingerichtet ist, in Abhängigkeit von einer Ventilstellung temperiertes Wasser bereitzustellen.

In vielen Fahrzeugen, beispielsweise in Eisenbahnwagen, Flugzeugen oder in Reisebussen, befinden sich Handwaschbecken, an denen temperiertes Wasser zur Verfügung gestellt werden soll. Mit Hilfe eines Mischventils werden Kaltwasser und Heißwasser in entsprechenden Mengenverhältnissen miteinander vermischt, so dass die gewünschte Temperatur an einem regulierbaren Wasserhahn bereitgestellt wird. Das Heißwasser wird in einem Warmwasserbereiter erzeugt, beispielsweise in einer Art Durchlauferhitzer. Wird das Fahrzeug längere Zeit ungenutzt abgestellt, so ist es beispielsweise aus Frostschutzgründen oder zur Durchführung von Wartungsarbeiten vielfach erforderlich oder wünschenswert, das Wasser vollständig abzulassen. Wird zu einem späteren Zeitpunkt das Versorgungssystem wieder in Betrieb genommen, so ist es erforderlich, dass dieses sich problemlos wieder befüllen lässt und anschließend das System einwandfrei funktioniert.

Es ist eine Aufgabe der Erfindung, ein System zur Versorgung einer regulierbaren Zuflussarmatur anzugeben, welches im Hinblick auf seine Befüllbarkeit verbessert ist. Außerdem soll ein verbessertes Verfahren zum Befüllen eines solchen Systems angegeben werden. Schließlich soll ein verbessertes Fahrzeug mit einem solchen System angegeben werden.

Die Aufgabe wird gelöst durch ein System zur Versorgung einer regulierbaren Zuflussarmatur mit temperiertem Wasser, wobei das System einen Kaltwasserzulauf, einen Warmwasserbereiter, eine Bypass-Leitung und ein Mischventil umfasst, und wobei der Warmwasserbereiter eingangsseitig an den Kaltwasserzulauf und ausgangsseitig an einen Warmwassereingang des Mischventils angeschlossen ist und die Bypass-Leitung den Kaltwasserzulauf direkt mit einem Kaltwassereingang des Mischventils verbindet, wobei das Mischventil ausgangsseitig an die Zuflussarmatur angeschlossen und dazu eingerichtet ist, in Abhängigkeit von einer Ventilstellung temperiertes Wasser bereitzustellen, wobei dieses System dadurch fortgebildet ist, dass in die Bypass-Leitung ein Durchflusselement integriert ist, welches eine Durchflussmenge durch die Bypass-Leitung zumindest temporär zumindest begrenzt.

Das erfindungsgemäße System zur Versorgung einer regulierbaren Zuflussarmatur beruht auf den folgenden technischen Überlegungen.

Wird beispielsweise ein Flugzeug für längere Zeit in kalter Umgebung abgestellt, wird das Wasserversorgungssystem beispielsweise eines Waschbeckens vollständig entleert, um Frostschäden vorzubeugen. Zum erneuten Befüllen wird ein Kaltwasserzulauf mit Wasser eines vorgegebenen Arbeitsdrucks beaufschlagt. Dies geschieht beispielsweise, indem eine Versorgungspumpe eingeschaltet wird, die eingangsseitig mit einem Kaltwasserversorgungsbehälter und ausgangsseitig mit dem Kaltwasserzulauf des Wasserversorgungssystems verbunden ist. Kurz hinter dem Kaltwasserzulauf gabelt sich das System in einen Warmwasserpfad und einen Kaltwasserpfad. Im Warmwasserpfad ist der Warmwasserbereiter vorhanden, beispielsweise ein Durchlauferhitzer. Der Kaltwasserpfad verbindet den Kaltwasserzulauf direkt mit dem Kaltwassereingang des Mischventils.

Der Warmwasserbereiter weist bauartbedingt ein größeres Volumen als die den Kaltwasserpfad bildende Bypass-Leitung auf. Dies führt dazu, dass der Warmwasserpfad ein größeres Volumen fasst als der Kaltwasserpfad. Aus diesem Grund steigt in dem Moment, in dem der Kaltwasserzulauf des Systems mit Kaltwasser beaufschlagt wird, der Wasserspiegel im Kaltwasserpfad schneller an als im parallelen Warmwasserpfad. Durch den Kaltwasserpfad steigt das dem System zugeführte Kaltwasser bis zur Zuflussarmatur oder einem gegebenenfalls vorhandenen fluidisch parallel zur Zuflussarmatur in das System integrierten Rückschlagventil, welches als Belüftungsventil dient. Der durch den Kaltwasserpfad schnell ansteigende Wasserpegel sorgt dafür, dass der Befüllvorgang endet, bevor der Warmwasserbereiter vollständig gefüllt ist. Mit anderen Worten verbleibt in dem Warmwasserbereiter eine Luftblase nicht unerheblichen Ausmaßes, und dies zu einem Zeitpunkt, zu dem das System als vollständig befüllt angesehen wird.

Warmwasserbereiter, beispielsweise Durchlauferhitzer, sind mit einer Sicherheitsschaltung versehen, die dafür sorgt, dass der unbefüllte oder nicht bis zu einem Grad zumindest näherungsweise vollständig befüllte Warmwasserbereiter nicht in Betrieb genommen werden kann. Durch diese Maßnahme wird ein Trockenlauf des Warmwasserbereiters vermieden. Verbleibt nun eine signifikante Menge an Luft im Warmwasserbereiter, so lässt sich das System zur Versorgung der regulierbaren Zuflussarmatur, wie es aus dem Stand der Technik bekannt ist, nicht starten.

Um diesen unerwünschten technischen Effekt zu vermeiden, weist das erfindungsgemäße System zur Versorgung der regulierbaren Zuflussarmatur ein Durchflusselement auf, welches in die Bypass-Leitung integriert ist, und welches die Durchflussmenge durch die Bypass-Leitung zumindest temporär begrenzt oder die Bypass-Leitung zumindest temporär absperrt. Durch diese technische Maßnahme wird der unerwünscht schnelle Anstieg des Wasserpegels im Kaltwasserpfad vermieden. Das Durchflusselement sorgt dafür, dass beim Befüllen des Systems der Warmwasserbereiter vollständig gefüllt wird, so dass sich das System anschließend problemlos starten lässt.

Gemäß einer vorteilhaften Ausführungsform ist das System dadurch fortgebildet, dass das Durchflusselement ein hydraulisch vorgesteuertes Ventil ist, welches in die Bypass-Leitung integriert ist und welches dazu eingerichtet ist, die Bypass-Leitung abzusperren oder freizugeben, wobei eine hydraulische Steuerleitung vorhanden ist, die eine Verbindungsleitung zwischen einem Ausgang des Warmwasserbereiters und dem Warmwassereingang des Mischventils mit einem Steuereingang des hydraulisch vorgesteuerten Ventils verbindet, so dass ein in dieser Verbindungsleitung herrschender Druck als hydraulischer Vorsteuerdruck dem hydraulisch vorgesteuerten Ventil bereitstellbar ist oder bereitgestellt wird.

Die Steuerleitung ist insbesondere an einem Verbindungspunkt mit der Verbindungsleitung zwischen dem Ausgang des Warmwasserbereiters und dem Warmwassereingang des Mischventils verbunden, der geodätisch höher liegt als der Ausgang des Warmwasserbereiters. So ist sichergestellt, dass der Steuerdruck an dem hydraulisch vorgesteuerten Ventil erst dann anliegt, wenn der Warmwasserbereiter auch vollständig gefüllt ist.

Gemäß dem genannten Ausführungsbeispiel ist ein hydraulisch vorgesteuertes Ventil hinter dem Ausgang des Warmwasserbereiters installiert. Das hydraulisch vorgesteuerte Ventil ist insbesondere so ausgestaltet, dass es geschlossen ist, wenn das System entleert ist. Beim Befüllen des Systems wird das Kaltwasser solange zurückgehalten, bis der Durchlauferhitzer vollständig gefüllt ist. Die im Heißwasserpfad ansteigende Wassersäule öffnet das hydraulisch vorgesteuerte Ventil in der Bypass-Leitung. Sobald der Warmwasserbereiter vollständig gefüllt ist, kann das Kaltwasser durch die geöffnete Bypass-Leitung in das System einströmen.

Gemäß einer weiteren vorteilhaften Ausführungsform ist das Durchflusselement eine Drossel. Insbesondere ist parallel zu der Drossel ein Bypass-Leitung-Rückschlagventil in die Bypass-Leitung integriert. Dieses Rückschlagventil überbrückt also die Drossel.

Die in die Bypass-Leitung integrierte Drossel sorgt dafür, dass beim Befüllen des Systems die Wassersäule im Kaltwasserpfad langsamer ansteigt als im Warmwasserpfad. Durch entsprechende Dimensionierung der Drossel kann die Steiggeschwindigkeit des Kaltwassers so eingestellt werden, dass stets sichergestellt ist, dass der Warmwasserbereiter vollständig gefüllt ist. Ein parallel zu der Drossel in die Bypass-Leitung integriertes Bypass-Leitung-Rückschlagventil erleichtert das Entleeren des Systems.

Gemäß einer weiteren vorteilhaften Ausführungsform ist das System dadurch fortgebildet, dass das Durchflusselement eine erste Drossel ist, wobei in eine Verbindungsleitung zwischen einem Ausgang des Warmwasserbereiters und dem Warmwassereingang des Mischventils eine zweite Drossel integriert ist, und wobei ein Zweidruckventil umfasst ist, dessen erster Eingang über eine erste Steuerleitung mit dem Ausgang des Warmwasserbereiters fluidisch verbunden ist und dessen zweiter Eingang über eine zweite Steuerleitung mit der Bypass-Leitung fluidisch verbunden ist, und wobei ein Ausgang des Zweidruckventils an eine Belüftungsleitung angeschlossen ist, in welche ein weiteres Rückschlagventil integriert ist. Die Belüftungsleitung ist beispielsweise an einen Ausgang der Zuflussarmatur angeschlossen.

Bei dem Zweidruckventil steht stets derjenige Eingang des Zweidruckventils mit dem Ausgang des Zweitdruckventils in Verbindung, an welchem der geringere Druck anliegt. Dies ist derjenige Eingang, der mit einer Luftsäule und nicht mit einer Wassersäule in Verbindung steht. Der Druckunterschied ergibt sich allein aus den unterschiedlichen Dichten von Luft und Wasser. Ist also einer der beiden Pfade (Kaltwasserpfad oder Warmwasserpfad) mit Wasser gefüllt, so schließt das Zweidruckventil gegenüber diesem Pfad. Dadurch wird der andere Pfad über den anderen Eingang des Zweidruckventils und dessen Ausgang schnell entlüftet. In demjenigen Pfad, in dem der höhere Druck anliegt, also die Wassersäule bereits steht, steigt diese nicht weiter. An einem Kreuzungspunkt, an dem der Eingang des Zweidruckventils mit dem Warmwasser- oder dem Kaltwasserpfad verbunden ist eine jeweils eine Drossel in den Warm- oder Kaltwasserpfad integriert. Diese Drossel verlangsamt den Anstieg der Wassersäule in dem Pfad, in dem der höhere Druck anliegt. Sind sowohl der Warmwasser- als auch der Kaltwasserpfad mit Wasser gefüllt, liegt an beiden Seiten des Zweidruckventils ein zumindest näherungsweise identischer Druck an.

Alle Drosseln sind auch als Drosselventil ausführbar. Alle Rückschlagventile arbeiten stets als Ablassventile. Sie sind so konstruiert, dass eine dichtend wirkende Kugel des Rückschlagventils bei nicht befüllter Leitung abfällt. Die in der Leitung vorhandene Luft kann daher in Sperrrichtung mehr oder weniger ungehindert durch das Rückschlagventil hindurchströmen. Steht hingegen eine Wassersäule an dem Rückschlagventil an, so schwimmt die Kugel des Rückschlagventils auf, und das Ventil sperrt. Die genannten Aspekte betreffen vorteilhaft alle Ausführungsformen.

Gemäß einer weiteren vorteilhaften Ausführungsform ist das System dadurch fortgebildet, dass eine Belüftungs-Bypass-Leitung einen Eingang der Zuflussarmatur mit einem Ausgang der Zuflussarmatur verbindet und in die Belüftungs-Bypass-Leitung ein Rückschlagventil als Belüftungsventil integriert ist.

Das Belüftungsventil erleichtert das Entleeren des Systems. Wird das System am Kaltwasserzulauf geöffnet, so dringt am Ausgang der regulierbaren Zuflussarmatur, also beispielsweise am Kopf eines Wasserhahns, Luft in das System ein. Unabhängig von der Stellung des Mischventils kann diese Luft in das System einfließen, so dass dieses durch das Belüftungsventil schnell entleert werden kann.

Das System ist ferner vorteilhaft dadurch fortgebildet, dass ein Vorratsbehälter für kaltes Wasser umfasst ist, der über eine Kaltwasserversorgungsleitung mit dem Kaltwasserzulauf fluidisch verbunden ist. Das System umfasst ferner insbesondere eine Pumpe, welche an dem Kaltwasserzulauf dem Vorratsbehälter entnommenes Kaltwasser bereitstellt. Es handelt sich beispielsweise um eine elektrisch betriebene Pumpe, ferner beispielsweise um eine batteriebetriebene Gleichstrompumpe.

Die regulierbare Zuflussarmatur und das Mischventil bilden ferner beispielsweise eine regulierbare Mischarmatur. Die regulierbare Zuflussarmatur ist beispielsweise an einem Waschbecken installiert.

Gemäß einer weiteren vorteilhaften Ausführungsform ist vorgesehen, dass das System gemäß einem oder mehreren der zuvor genannten Ausführungsformen vollständig in ein Fahrzeug integriert ist. Bei diesem Fahrzeug handelt es sich beispielsweise um ein Landfahrzeug, ein Wasserfahrzeug oder ein Luftfahrzeug. Beispielsweise ist das System in einem Flugzeug, einem Reisebus oder in einem Bahnwaggon vollständig integriert.

Die Aufgabe wird außerdem gelöst durch ein Fahrzeug, welches ein System nach einem oder mehreren der zuvor genannten Aspekte umfasst. Bei diesem Fahrzeug handelt es sich beispielsweise um ein Landfahrzeug, ein Wasserfahrzeug oder ein Luftfahrzeug. Beispielsweise ist das Fahrzeug ein Flugzeug, ein Reisebus oder ein Bahnwaggon.

Auf das Fahrzeug treffen gleiche oder ähnliche Vorteile zu, wie sie bereits im Hinblick auf das System selbst erwähnt wurden. Das Fahrzeug ist beispielsweise leichter zu warten, da es ein Versorgungssystem umfasst, welches leicht zu befüllen und zu entleeren ist.

Die Aufgabe wird außerdem gelöst durch ein Verfahren zum Befüllen eines Systems zur Versorgung einer regulierbaren Zuflussarmatur mit temperiertem Wasser, wobei das System einen Kaltwasserzulauf, einen Warmwasserbereiter, eine Bypass-Leitung und ein Mischventil umfasst, und wobei der Warmwasserbereiter eingangsseitig an den Kaltwasserzulauf und ausgangsseitig an einen Warmwassereingang des Mischventils angeschlossen ist und die Bypass-Leitung den Kaltwasserzulauf mit einem Kaltwassereingang des Mischventils verbindet, wobei das Mischventil ausgangsseitig an die Zuflussarmatur angeschlossen und dazu eingerichtet ist, in Abhängigkeit von einer Ventilstellung temperiertes Wasser bereitzustellen, wobei das Verfahren dadurch fortgebildet ist, dass eine Belüftungs-Bypass-Leitung einen Eingang der Zuflussarmatur mit einem Ausgang der Zuflussarmatur verbindet und in die Belüftungs-Bypass-Leitung ein Rückschlagventil als Belüftungsventil integriert ist und in die Bypass-Leitung ein Durchflusselement integriert ist und wobei zu Beginn des Verfahrens das System vollständig entleert ist und das Verfahren die folgenden Schritte umfasst:
Bereitstellen von Kaltwasser mit einem Versorgungsdruck an dem Kaltwasserzulauf, Begrenzen der Durchflussmenge in der Bypass-Leitung mittels des Durchflusselements und vollständiges Befüllen des Warmwasserbereiters, bevor das durch die Bypass-Leitung strömende Kaltwasser das Rückschlagventil 36 erreicht.

Auch auf das Verfahren treffen gleiche oder ähnliche Vorteile zu, wie sie bereits im Hinblick auf das System zur Versorgung der regulierbaren Zuflussarmatur erwähnt wurden. Vor allem ist bei einem solchen Verfahren sichergestellt, dass der Warmwasserbereiter bei der Befüllung des Systems vollständig gefüllt wird, so dass das System anschließend sicher und zuverlässig gestartet werden kann.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1 bis 4: jeweils schematisch und vereinfacht ein System zur Versorgung einer regulierbaren Zuflussarmatur und
- Fig.5: ein schematisch und vereinfachtes Fahrzeug mit einem solchen System.

In den Zeichnungen sind jeweils gleiche oder gleichartige Elemente und/oder Teile mit denselben Bezugsziffern versehen, so dass von einer erneuten Vorstellung jeweils abgesehen wird.

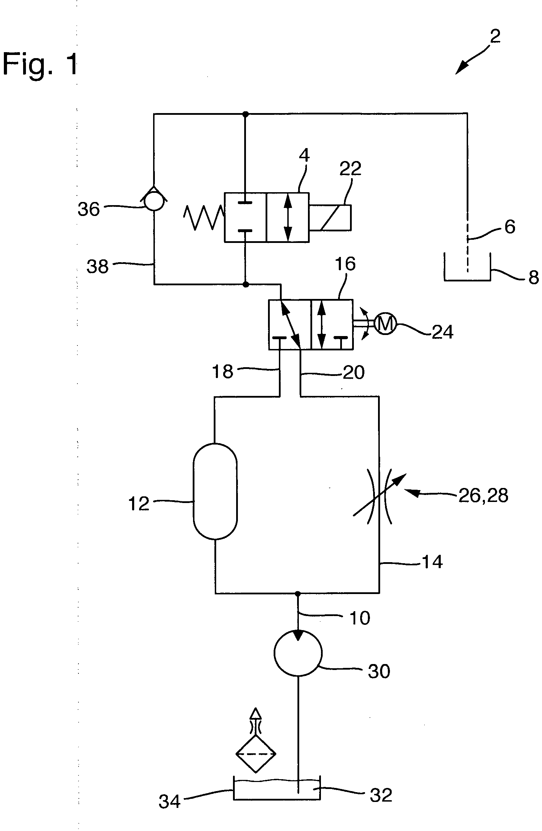

Fig. 1 zeigt ein System 2 zur Versorgung einer regulierbaren Zuflussarmatur 4, beispielsweise eines Wasserhahns, mit temperiertem Wasser 6. Die regulierbare Zuflussarmatur 4 ist beispielsweise an einem Waschbecken 8 angebracht. Das System 2 umfasst einen Kaltwasserzulauf 10, einen Warmwasserbereiter 12, beispielsweise einen Durchlauferhitzer oder Boiler, eine Bypass-Leitung 14 und ein Mischventil 16. Das Mischventil 16 umfasst einen Warmwassereingang 18 und einen Kaltwassereingang 20. Ausgangsseitig ist das Mischventil 16 mit der regulierbaren Zuflussarmatur 4 verbunden. An einem ersten Bedienelement 22, beispielsweise einem Hebel, der Zuflussarmatur 4 wird der Wasserfluss des temperierten Wassers 6 reguliert oder eingestellt. An einem zweiten Bedienelement 24, beispielsweise einem Hebel oder Drehrad, wird an dem Mischventil 16 das Verhältnis zwischen warmem und kaltem Wasser eingestellt, so dass eine gewünschte Temperatur des temperierten Wassers 6 eingestellt werden kann. Die Zuflussarmatur 4 und das Mischventil 16 können in eine gemeinsame regulierbare Mischarmatur, beispielsweise eine Einhandmischarmatur, integriert sein.

Der Warmwasserbereiter 12 ist eingangsseitig an den Kaltwasserzulauf 10 und ausgangsseitig an den Warmwassereingang 18 des Mischventils 16 angeschlossen. Die Bypass-Leitung 14 verbindet den Kaltwasserzulauf 10 direkt mit dem Kaltwassereingang 20 des Mischventils 16. Eine fluidische Verbindung, die ausgehend von dem Kaltwasserzulauf 10 über den Warmwasserbereiter 12 bis zum Warmwassereingang 18 des Mischventils 16 reicht, bildet einen Warmwasserpfad. Eine weitere fluidische Verbindung, die von dem Kaltwasserzulauf 10 über die Bypass-Leitung 14 bis zum Kaltwassereingang 20 des Mischventils 16 reicht, bildet einen Kaltwasserpfad.

In die Bypass-Leitung 14 ist ein Durchflusselement 26 integriert, welches eine Durchflussmenge durch die Bypass-Leitung 14 zumindest temporär begrenzt. Bei dem in Fig. 1 dargestellten Ausführungsbeispiel ist das Durchflusselement 26 ein Drosselventil 28. Es ist ebenso vorgesehen, dass es sich bei dem Durchflusselement 26 um eine fest eingestellte Drossel handelt.

Das System 2 ist beispielsweise vollständig in ein Fahrzeug, beispielsweise ein Luftfahrzeug, Landfahrzeug oder Wasserfahrzeug, integriert. Wird beispielsweise ein Reisebus, Bahnwaggon oder Flugzeug für längere Zeit in kalter Umgebung abgestellt, so wird aus Frostschutzgründen das Wasser vollständig aus dem System 2 abgelassen. Zum Wiederbefüllen des Systems 2 wird der Kaltwasserzulauf 10 mit Frischwasser 32 eines vorgesehenen Arbeitsdrucks beaufschlagt. Hierzu wird beispielsweise eine Pumpe 30 eingeschaltet. Diese saugt kaltes Frischwasser 32 aus einem Versorgungsbehälter 34 an und stellt dieses über eine Kaltwasserversorgungsleitung an dem Kaltwasserzulauf 10 mit einem vorbestimmten Arbeitsdruck bereit.

Der Warmwasserbereiter 12, beispielsweise ein Durchlauferhitzer, ist mit einer Sicherheitsschaltung versehen, die dafür sorgt, dass der Warmwasserbereiter 12 nicht trocken betrieben werden kann. Bevor sich also das System 2 starten lässt, muss der Warmwasserbereiter 12 vollständig mit Wasser gefüllt sein. Das Volumen des Warmwasserpfades ist größer als dasjenige des Kaltwasserpfades. Dies liegt daran, dass der Warmwasserbereiter 12 unweigerlich ein größeres Volumen als die Bypass-Leitung 14 umfasst. Beim Befüllen des Systems 2 muss sichergestellt sein, dass der Warmwasserbereiter 12 vollständig gefüllt ist, bevor der Wasserstand die Zuflussarmatur erreicht. Es muss also mit anderen Worten vermieden werden, dass der Wasserstand durch die Bypass-Leitung 14 schnell ansteigt und in dem Warmwasserbereiter 12 eine Luftblase zurückbleibt. Das Drosselelement 26, d.h. das Drosselventil 28, wird so eingestellt, dass beim Befüllvorgang des Systems 2 sichergestellt ist, dass der Wasserstand in der Bypass-Leitung 14 so langsam steigt, dass der Warmwasserbereiter 12 im Warmwasserpfad in jedem Fall vollständig gefüllt wird.

Steigt der Wasserstand über das Mischventil 16 hinaus bis zur Zuflussarmatur 4, gelangt er an ein Rückschlagventil 36, welches als Belüftungsventil ausgestaltet ist. Das Rückschlagventil 36 ist in einer Belüftungs-Bypass-Leitung 38 integriert. Die Belüftungs-Bypass-Leitung 38 verbindet einen Eingang der Zuflussarmatur 4 mit einem Ausgang der Zuflussarmatur 4. Beim Belüften des Systems 2 kann über den Auslauf der Zuflussarmatur 4 und das in diesem Fall sich öffnende Rückschlagventil 36 schnell Luft in das System 2 eindringen, so dass sich dieses schnell trockenlegen lässt.

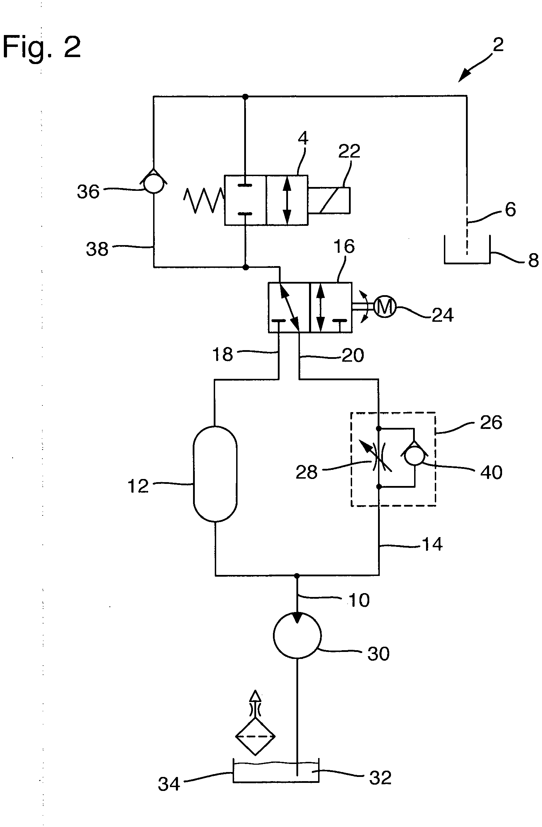

Fig. 2 zeigt ein weiteres System 2 zur Versorgung einer regulierbaren Zuflussarmatur 4, welches gegenüber dem aus Fig. 1 bekannten System 2 einen Unterschied aufweist. Das Durchflusselement 26 ist nämlich als eine Kombination aus einem Drosselventil 28, zu welchem parallel ein Bypass-Leitung-Rückschlagventil 40 gekoppelt ist, ausgestaltet. Das Bypass-Leitung-Rückschlagventil 40 erlaubt eine schnelle Entleerung der Bypass-Leitung 14 beim Entleeren des Systems 2.

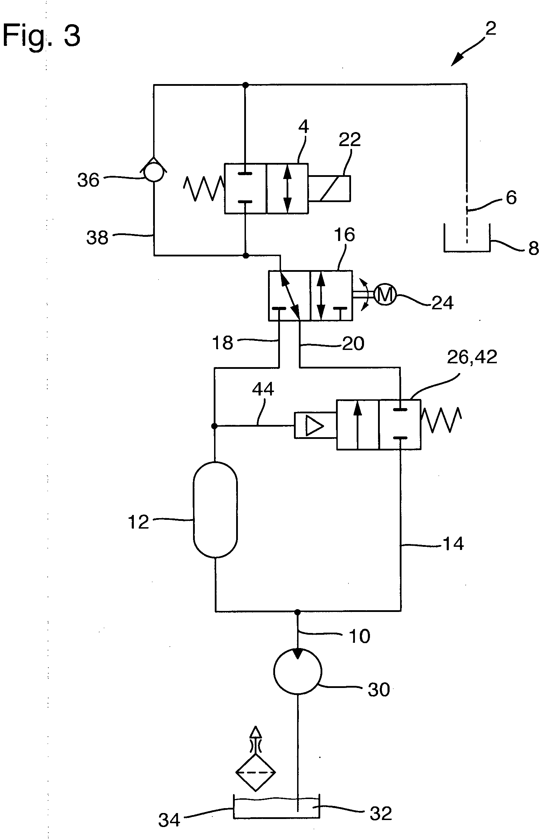

Fig. 3 zeigt ein System 2 zur Versorgung einer regulierbaren Zuflussarmatur 4 mit temperiertem Wasser 6 gemäß einem weiteren Ausführungsbeispiel. Dieses System 2 ist wiederum ähnlich wie das aus Fig. 1 bekannte System 2 aufgebaut. Als Durchflusselement 26 weist das in Fig. 3 gezeigte Ausführungsbeispiel jedoch ein hydraulisch vorgesteuertes Ventil 42 auf.

Das hydraulisch vorgesteuerte Ventil 42 ist in die Bypass-Leitung 14 integriert und dazu eingerichtet, die Bypass-Leitung 14 abzusperren oder freizugeben. Mit dem hydraulisch vorgesteuerten Ventil 42 ist eine hydraulische Steuerleitung 44 verbunden. Diese ist fluidisch mit einer Verbindungsleitung zwischen einem Ausgang des Warmwasserbereiters 12 und dem Warmwassereingang 18 des Mischventils 16 verbunden. Ein in dieser Verbindungsleitung herrschender hydraulischer Druck wird als Steuerdruck dem hydraulisch vorgesteuerten Ventil 42 bereitgestellt. Das hydraulisch vorgesteuerte Ventil 42 ist geschlossen, wenn in der hydraulischen Steuerleitung 44 kein Wasser steht, also lediglich der allgemeine Luftdruck oder kein Druck anliegt. Beim Befüllen des Systems 2 steigt der Wasserspiegel zunächst im Warmwasserpfad bis auf die Höhe des Verbindungspunktes zwischen der hydraulischen Steuerleitung 44 und der Verbindungsleitung zwischen dem Ausgang des Warmwasserbereiters 12 und dem Warmwassereingang 18. Steht eine Wassersäule in der hydraulischen Steuerleitung 44, öffnet das hydraulisch vorgesteuerte Ventil 42. Die Bypass-Leitung 14 wird freigegeben. Der Kaltwasserpfad wird ausgehend von dem Kaltwasserzulauf 10 befüllt. Mit anderen Worten wird also der Kaltwasserpfad abgesperrt, bis der Warmwasserbereiter 12 vollständig gefüllt ist.

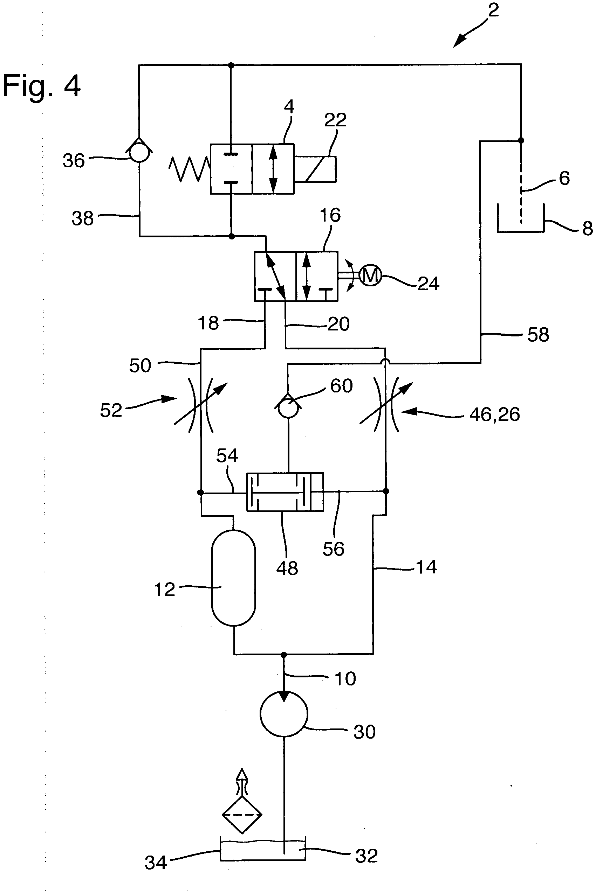

Fig. 4 zeigt ein weiteres System 2 zur Versorgung einer regulierbaren Zuflussarmatur 4 mit temperiertem Wasser 6 gemäß einem weiteren Ausführungsbeispiel. Das in Fig. 4 gezeigte System 2 umfasst neben einer ersten Drossel, die als ein erstes Drosselventil 46 ausgebildet ist, ein Zweidruckventil 48 auf. In eine Verbindungsleitung 50 zwischen einem Ausgang des Warmwasserbereiters 12 und dem Warmwassereingang 18 des Mischventils 16 ist eine zweite Drossel, gemäß dem dargestellten Ausführungsbeispiel ein zweites Drosselventil 52, integriert. Ein erster Eingang des Zweidruckventils 48 ist über eine erste Steuerleitung 54 mit dem Ausgang des Warmwasserbereiters 12 fluidisch verbunden. Ein zweiter Eingang des Zweidruckventils 48 ist über eine zweite Steuerleitung 56 mit der Bypass-Leitung 14 fluidisch verbunden. Ein Ausgang des Zweidruckventils 48 ist an eine Belüftungsleitung 58 angeschlossen, in welcher ein weiteres Rückschlagventil 60 integriert ist.

Das Zweidruckventil 48 ist so ausgestaltet, dass jeweils derjenige Eingang mit dem Ausgang des Zweidruckventils 48 verbunden wird, an welchem der geringere Druck anliegt. Steigt also beim Befüllen des Systems 2 der Wasserspiegel in der Bypass-Leitung 14 recht schnell bis zu dem ersten Drosselventil 46 an, so wird in der zweiten Steuerleitung 56 ein höherer Druck anliegen als in der ersten Steuerleitung 54. Das Zweidruckventil 48 ist zwischen dem ersten Eingang und dem Ausgang offen, entsprechend wird der Warmwasserpfad über die erste Steuerleitung 54 und die Belüftungsleitung 58 schnell entlüftet. Das weitere Rückschlagventil 60 ist bei diesem Vorgang offen. Die Befüllung des Warmwasserpfades schreitet auf diese Art und Weise solange fort, bis der Warmwasserbereiter 12 vollständig gefüllt ist und der Wasserspiegel über die erste Steuerleitung 54 und den Ausgang des Zweidruckventils 48 zu dem weiteren Rückschlagventil 60 gelangt. Dessen Dichtelement, beispielsweise eine Kugel, schwimmt auf und schließt das weitere Rückschlagventil 60. Während dieses relativ schnell vonstattengehenden Vorgangs ist der Wasserspiegel im Kaltwasserpfad aufgrund der Einstellung des ersten Drosselventils 46 nur unwesentlich weiter gestiegen, so dass sowohl der Warmwasserpfad als auch der Kaltwasserpfad vollständig gefüllt sind, wenn die Wassersäule das Rückschlagventil 36 erreicht.

Das erste Drosselventil 46 und das zweite Drosselventil 52 dienen dazu, die Steigraten der Wassersäulen im Warmwasserpfad und im Kaltwasserpfad wie gewünscht einzustellen, so dass sichergestellt ist, dass beim Befüllen des Systems 2 der Warmwasserbereiter 12 vollständig gefüllt wird.

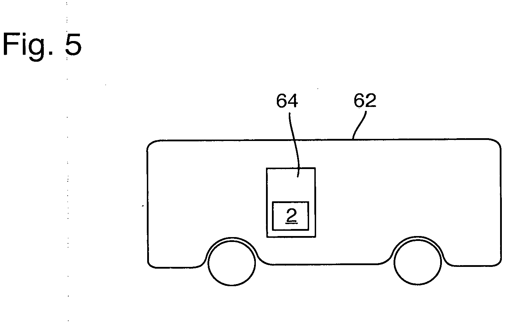

Die Systeme 2, wie sie gemäß den zuvor genannten Ausführungsbeispielen erläutert wurden, sind beispielsweise vollständig in ein Fahrzeug integriert. Fig. 5 zeigt in schematischer und vereinfachter Darstellung ein Fahrzeug 62. Beispielhaft und schematisch ist ein Reisebus angedeutet, der einen Waschraum 64 umfasst, in dem das System 2 zur Versorgung der regulierbaren Zuflussarmatur 4 integriert ist. Das System 2 versorgt beispielsweise einen Wasserhahn, welcher an einem Waschbecken in dem Waschraum 64 montiert ist.

Bei einem Verfahren zum Befüllen des Systems 2, wie es gemäß verschiedener Ausführungsbeispiele zuvor erläutert wurde, ist zu Beginn des Verfahrens das System 2 vollständig entleert. Es wird zum Befüllen des Systems 2 Frischwasser 32 mit einem Versorgungsdruck an dem Kaltwasserzulauf 10 bereitgestellt, beispielsweise indem die Pumpe 30 angeschaltet wird. Die Durchflussmenge in der Bypass-Leitung 14 wird mittels des Durchflusselements 26 begrenzt, so dass der Warmwasserbereiter 12 vollständig befüllt wird, bevor das durch die Bypass-Leitung 14 strömende Kaltwasser, bei dem es sich um Frischwasser 32 handelt, das Rückschlagventil 36 erreicht.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Im Rahmen der Erfindung sind Merkmale, die mit "insbesondere" oder "vorzugsweise" gekennzeichnet sind, als fakultative Merkmale zu verstehen.

### Bezugszeichenliste

- 2: System
- 4: Zuflussarmatur
- 6: temperiertes Wasser
- 8: Waschbecken
- 10: Kaltwasserzulauf
- 12: Warmwasserbereiter
- 14: Bypass-Leitung
- 16: Mischventil
- 18: Warmwassereingang
- 20: Kaltwassereingang
- 22: erstes Bedienelement
- 24: zweites Bedienelement
- 26: Durchflusselement
- 28: Drosselventil
- 30: Pumpe
- 32: Frischwasser
- 34: Versorgungsbehälter
- 36: Rückschlagventil
- 38: Belüftungs-Bypass-Leitung
- 40: Bypass-Leitung-Rückschlagventil
- 42: hydraulisch vorgesteuertes Ventil
- 44: hydraulische Steuerleitung
- 46: erstes Drosselventil
- 48: Zweidruckventil
- 50: Verbindungsleitung
- 52: zweites Drosselventil
- 54: erste Steuerleitung
- 56: zweite Steuerleitung
- 58: Belüftungsleitung
- 60: weiteres Rückschlagventil
- 62: Fahrzeug
- 64: Waschraum

## Patentansprüche

1. System (2) zur Versorgung einer regulierbaren Zuflussarmatur (4) mit temperiertem Wasser (6), wobei das System einen Kaltwasserzulauf, einen Warmwasserbereiter (12), eine Bypass-Leitung (14) und ein Mischventil (16) umfasst, und wobei der Warmwasserbereiter (12) eingangsseitig an den Kaltwasserzulauf (10) und ausgangsseitig an einen Warmwassereingang (18) des Mischventils (16) angeschlossen ist und die Bypass-Leitung (14) den Kaltwasserzulauf (10) mit einem Kaltwassereingang (20) des Mischventils (16) verbindet, wobei das Mischventil (16) ausgangsseitig an die Zuflussarmatur (4) angeschlossen und dazu eingerichtet ist, in Abhängigkeit von einer Ventilstellung temperiertes Wasser (6) bereitzustellen, **dadurch gekennzeichnet, dass** in die Bypass-Leitung (14) ein Durchflusselement (26) integriert ist, welches eine Durchflussmenge durch die Bypass-Leitung (14) zumindest temporär zumindest begrenzt.

2. System (2) nach Anspruch 1, **dadurch gekennzeichnet, dass** das Durchflusselement (26) ein hydraulisch vorgesteuertes Ventil (42) ist, welches in die Bypass-Leitung (14) integriert ist und welches dazu eingerichtet ist, die Bypass-Leitung (14) abzusperren oder freizugeben, wobei eine hydraulische Steuerleitung (44) vorhanden ist, die eine Verbindungsleitung zwischen einem Ausgang des Warmwasserbereiters (12) und dem Warmwassereingang (18) des Mischventils (16) mit einem Steuereingang des hydraulisch vorgesteuerten Ventils (42) verbindet, so dass ein in dieser Verbindungsleitung herrschender Druck als hydraulischer Vorsteuerdruck dem hydraulisch vorgesteuerten Ventil (42) bereitstellbar ist oder bereitgestellt wird.

3. System (2) nach Anspruch 1, **dadurch gekennzeichnet, dass** das Durchflusselement (26) eine Drossel ist.

4. System (2) nach Anspruch 3, **dadurch gekennzeichnet, dass** parallel zu der Drossel ein Bypass-Leitung-Rückschlagventil (40) in die Bypass-Leitung (14) integriert ist.

5. System (2) nach Anspruch 1, **dadurch gekennzeichnet, dass** das Durchflusselement (26) eine erste Drossel (46) ist, wobei in eine Verbindungsleitung (50) zwischen einem Ausgang des Warmwasserbereiters (12) und dem Warmwassereingang (18) des Mischventils (16) eine zweite Drossel (52) integriert ist, und wobei ein Zweidruckventil (48) umfasst ist, dessen erster Eingang über eine erste Steuerleitung (54) mit dem Ausgang des Warmwasserbereiters (12) fluidisch verbunden ist und dessen zweiter Eingang über eine zweite Steuerleitung (56) mit der Bypass-Leitung (14) fluidisch verbunden ist, und wobei ein Ausgang des Zweidruckventils (48) an eine Belüftungsleitung (58) angeschlossen ist, in welche ein weiteres Rückschlagventil (60) integriert ist.

6. System (2) nach einem der Ansprüche 1 bis 5, **dadurch gekennzeichnet, dass** eine Belüftungs-Bypass-Leitung (38) einen Eingang der Zuflussarmatur (4) mit einem Ausgang der Zuflussarmatur (4) verbindet und in die Belüftungs-Bypass-Leitung (38) ein Rückschlagventil (36) als Belüftungsventil (36) integriert ist.

7. System (2) nach einem der Ansprüche 1 bis 6, **dadurch gekennzeichnet, dass** das System (2) ferner einen Vorratsbehälter (34) für kaltes Frischwasser (32) umfasst, der über eine Kaltwasserversorgungsleitung mit dem Kaltwasserzulauf (10) fluidisch verbunden ist.

8. System (2) nach einem der Ansprüche 1 bis 7, **dadurch gekennzeichnet, dass** das System vollständig in ein Fahrzeug integriert ist.

9. Fahrzeug (62) umfassend ein System (2) nach einem der Ansprüche 1 bis 8.

10. Verfahren zum Befüllen eines Systems (2) zur Versorgung einer regulierbaren Zuflussarmatur (4) mit temperiertem Wasser (6), wobei das System (2) einen Kaltwasserzulauf (10), einen Warmwasserbereiter (12), eine Bypass-Leitung (14) und ein Mischventil (16) umfasst, und wobei der Warmwasserbereiter (12) eingangsseitig an den Kaltwasserzulauf (10) und ausgangsseitig an einen Warmwassereingang (18) des Mischventils (16) angeschlossen ist und die Bypass-Leitung (14) den Kaltwasserzulauf (10) mit einem Kaltwassereingang (20) des Mischventils (16) verbindet, wobei das Mischventil (16) ausgangsseitig an die Zuflussarmatur (4) angeschlossen und dazu eingerichtet ist, in Abhängigkeit von einer Ventilstellung temperiertes Wasser (6) bereitzustellen, **dadurch gekennzeichnet, dass** eine Belüftungs-Bypass-Leitung (38) einen Eingang der Zuflussarmatur (4) mit einem Ausgang der Zuflussarmatur (4) verbindet und in die Belüftungs-Bypass-Leitung (38) ein Rückschlagventil (36) als Belüftungsventil integriert ist und in die Bypass-Leitung (14) ein Durchflusselement (26) integriert ist und wobei zu Beginn des Verfahrens das System (2) vollständig entleert ist und das Verfahren die folgenden Schritte umfasst:
Bereitstellen von Frischwasser (32) mit einem Versorgungsdruck an dem Kaltwasserzulauf (10),
Begrenzen der Durchflussmenge in der Bypass-Leitung (14) mittels des Durchflusselements (26) und
vollständiges Befüllen des Warmwasserbereiters (12) bevor das durch die Bypass-Leitung (14) strömende Kaltwasser das Rückschlagventil (36) erreicht.
